# EUROPEAN PATENT APPLICATION

(11) **EP 4 160 131 A1**
(43) Date of publication of application: **05.04.2023**
(21) Application number: 21200061.6
(22) Date of filing: 30.09.2021
(51) Int. Cl.: F28D 17/04, F28D 20/00, F28F 27/02

(54) **THERMAL ENERGY STORAGE ASSEMBLY WITH FLUID MIXING CONCEPT**

(71) Applicant: Siemens Gamesa Renewable Energy GmbH & Co. KG, 20097 Hamburg (DE)
(72) Inventor: Huck, Daniel, 22309 Hamburg (DE)
(74) Representative: SGRE-Association

(57) **Abstract**

It is described a thermal energy storage assembly (190) comprising a first thermal energy storage device (110), a second thermal energy storage device (120) being fluidically coupled to the first thermal energy storage device (110) in parallel, and a flow control unit (130) configured for controlling a first flow of a heat transfer fluid through the first thermal energy storage device (110) and a second flow of the heat transfer fluid through the second thermal energy storage device (120), wherein in a charging mode the first flow of the heat transfer fluid is controllable by the flow control unit (130) in such a way that the first amount of thermal energy introduced in the first thermal energy storage device (110) is larger than the second amount of thermal energy introduced in the second thermal energy storage device (120), and wherein in a discharging mode the first flow of the heat transfer fluid is controllable by the flow control unit (130) in such a way that the first amount of thermal energy removed from the first thermal energy storage device (110) is larger than the second amount of thermal energy removed by the second thermal energy storage device (120). It is further described a system (100) for storing thermal energy comprising the thermal energy storage assembly (190) and a method for storing thermal energy in the thermal energy storage assembly (190).

## Description

### Field of invention

The present invention relates to the field of thermocline storage technology. In particular, the present invention relates to a thermal energy storage assembly comprising a first thermal energy storage device, a second thermal energy storage device and a flow control unit. Further, the present invention relates to a system for storing thermal energy comprising such a thermal energy storage assembly. Furthermore, the invention relates to a method for storing thermal energy within such a thermal energy storing assembly.

### Art Background

Thermocline storage technology may describe the use of a thermal energy storage device, wherein a cold fluid and a hot fluid are separated by an intermediate temperature zone. The intermediate temperature zone in the thermal energy storage device is called thermocline.

A thermal energy storage may use heat that is converted from electrical energy, available as residual (waste) heat or taken from an existing heat cycle and then stored in a storage material, e.g., rocks. At a later point in time the heat may be used for district heating or other purposes such as industrial processes requiring heat or it may be recovered into electrical energy and may be fed into the grid during periods of high demand.

To ensure a stable temperature profile inside the thermal energy storage device it may be beneficial to push out the thermocline zone on both a hot end while discharging and a cold end while charging in order to reset a poor thermocline zone which may particularly be a relatively large thermocline zone with a relatively flat temperature gradient, and to reduce the temperature difference in the thermal energy storage device while in idle.

However, the temperature gradient and the maximum temperature which may be pushed out at the cold end or the hot end, is constrained by limits in the system for storing thermal energy, e.g., maximum blower operating temperature, required heat consumer (e.g., HRSG) operating temperature, costs, and material design limits.

One known approach for using thermocline storage technology is a multi-module system including several thermal energy storage devices, wherein the thermocline zones of individual thermal energy storage devices are pushed out simultaneously. This results in a significant change in a storage mass flow, volume flow and blower power depending on the control scheme in place. If e.g. the thermal power would need to be kept constant in the discharging mode, the decreasing storage outlet temperature is needed to be compensated by an increasing mass flow. This may only be possible to a certain degree as on the one hand heat exchanger surfaces of connected consumers have to be designed for this increased mass flow. On the other hand, a desired consumer temperature limits a minimum temperature to which the thermocline zone may be pushed out. On the cold end of a thermal energy storage device, a maximum temperature to which the thermocline zone may be pushed out may be limited by material parameters such as a maximum operating temperature of a blower or piping on the respective cold end of the used thermal energy storage device. Hence, in today's systems for storing thermal energy, the thermal energy storage device may be charged and discharged up to a certain temperature which is determined by the system.

In a known method for handling the thermocline zone inside a thermal energy storage device a charging process is stopped when an outlet temperature at a cold end of a thermal energy storage device reaches a certain temperature that is higher than a low temperature level of the thermal energy storage device. Hence, fluid with a temperature higher than the low temperature level of the thermal energy storage device leaves the thermal energy storage and a part of the thermocline zone comprising a temperature slightly higher than the low temperature level of the thermal energy storage device is removed from the storage. This may result in a partly removed thermocline zone.

WO 2020/204933 A1 contains a plurality of storage tanks fluidly coupled to one another in series, so as to effectively form a single tank having an equivalent height of the combined height of the plurality of storage tanks. The method comprises identifying a thermocline zone between a hot thermal storage fluid and a cold thermal storage fluid within a plurality of storage tanks, computing an average temperature of the thermocline zone, directing thermal storage fluid from the bottom of an initial storage tank of the plurality of storage tanks containing the thermocline zone to a heat source heat exchanger for heating, and terminating fluid flow from the bottom of the initial tank and directing thermal storage fluid from the bottom of a first subsequent storage tank.

There may be a need for improving the temporal storage of thermal energy in particular with respect to the storage capacity and the efficiency.

### Summary of the Invention

This need may be met by the subject matter according to the independent claims. Advantageous embodiments of the present invention are described by the dependent claims.

According to a first aspect of the invention there is provided a thermal energy storage assembly comprising a first thermal energy storage device, a second thermal energy storage device being fluidically coupled to the first thermal energy storage device in parallel, and a flow control unit configured for controlling a first flow of a heat transfer fluid through the first thermal energy storage device and a second flow of the heat transfer fluid through the second thermal energy storage device. In a charging mode, wherein thermal energy is supposed to be transferred from the heat transfer fluid to the first thermal energy storage device and the second thermal energy storage device, a first amount of thermal energy is introducible by the first flow of the heat transfer fluid in the first thermal energy storage device and a second amount of thermal energy is introducible by the second flow of the heat transfer fluid in the second thermal energy storage device, the first flow of the heat transfer fluid is controllable by the flow control unit in such a way that the first amount of thermal energy introduced in the first thermal energy storage device is larger than the second amount of thermal energy introduced in the second thermal energy storage device. Further, in a discharging mode, wherein the heat transfer fluid is supposed to extract thermal energy from the first thermal energy storage device and the second thermal energy storage device, a first amount of thermal energy is removable by the first flow of the heat transfer fluid from the first thermal energy storage device and a second amount of thermal energy is removable by the second flow of the heat transfer fluid from the second thermal energy storage device, the first flow of the heat transfer fluid is controllable by the flow control unit in such a way that the first amount of thermal energy removed from the first thermal energy storage device is larger than the second amount of thermal energy removed by the second thermal energy storage device.

The described thermal energy storage assembly is based on the idea that by asymmetrically charging or discharging the first thermal energy storage device and the second thermal energy storage device such that the first amount of thermal energy introduced in or removed from the first thermal energy storage device is larger than the second amount of thermal energy introduced in or removed from the second thermal energy storage device, may provide the possibility to remove the thermocline zone from the first thermal energy storage device during charging and discharging while maintaining a predefined temperature at an outlet of the thermal energy storage assembly. Therefore, an increased storage capacity for thermal energy may be realized.

By providing the described thermal energy storage assembly, a desired temperature profile establishes within the first thermal energy storage device. The resulting temperature profile has a desired ratio of regions with high temperature to a total volume of the first thermal energy storage device. The size of the region with the high temperature constates a usable thermal energy storage volume for a subsequent discharging of the thermal energy storage assembly.

However, a negative impact on an overall plant performance from pushing out the thermocline zone of individual thermal energy storage devices, particularly from the first thermal energy storage device, may be minimized by the described thermal energy storage assembly. Particularly by mixing heat transfer fluid guided out of the first thermal energy storage device and having a temperature differing from the predefined temperature at an outlet of the thermal energy storage assembly, with heat transfer fluid guided out of the second thermal energy storage device in which the thermocline zone is pushed out less or not at all, the impact of temperature changes introduced by the thermocline zone of the first thermal energy storage device may be minimized.

In the first thermal energy storage device respectively the second thermal energy storage device, cold and hot fluid are separated by an intermediate temperature zone called thermocline zone. When in idle, heat exchanges within the first thermal energy storage device and the second thermal energy storage device lead to an expansion of the thermocline zone and heat losses may lead to a temperature decrease.

To ensure a stable temperature profile inside the first thermal energy storage device, it may be beneficial to push out the thermocline zone on the cold end while operating the thermal energy storage assembly in the charging mode, in order to reset a poor thermocline zone and in order to reduce the temperature difference in the first thermal energy storage device while in idle.

The thermal energy storage assembly may advantageously provide the possibility to charge or discharge the first thermal energy storage device to a greater extent so as to stabilize the thermocline zone inside or reduce the thermocline zone from the first thermal energy storage device and to maintain the temperature limit determined by the system coupled to the thermal energy storage assembly.

In the thermal energy storage assembly, the outlet temperature of the thermal energy storage assembly corresponds to a mixing temperature of the outlet temperature of the first thermal energy storage device and the outlet temperature of the second thermal energy storage device. When pushing the thermocline zone out of the first thermal energy storage device, the outlet temperature of the first thermal energy storage device differs from the predefined temperature set by the system coupled to the thermal energy storage assembly. By mixing it with the heat transfer fluid flowing out of the second thermal energy storage device, the thermocline zone may be pushed out to a greater extent while maintaining the predefined temperature at the outlet of the thermal energy storage assembly, than when the first thermal energy storage device and the second thermal energy storage device are charged/discharged equally.

Further advantages can be seen in that a thermocline zone may be pushed out from the first thermal energy storage device to a greater extent in either the discharging mode or the charging mode, while a predefined temperature at the outlet of the thermal energy storage assembly may be maintained. This may allow a correction of the thermocline zone after a long idle time. Additionally, by improving a thermocline zone within the first thermal energy storage device, a constant discharging temperature may be ensured, and more energy may be stored in respectively discharged from the first thermal energy storage device.

Additionally, a temperature at an outlet of the thermal energy storage assembly in the charging mode or in the discharging mode may be kept constant and may be adapted to be a predefined temperature. Thereby, overall system costs may be reduced. For example, a lower blower inlet temperature leads to decreased blower costs and lower power consumption. Hence, a percentage of electricity put into a thermal energy storage device that may later be retrieved, a so-called roundtrip efficiency, may be kept constant over a plurality of cycles, particularly over a plurality of discharging cycles.

The first amount of thermal energy being larger than the second amount of thermal energy may denote that the first thermal energy storage device may be charged to a first state of charge which is higher than a second state of charge to which the second thermal energy storage device is charged if the first thermal energy storage device and the second thermal energy storage device have the same size. Particularly because the amount of thermal energy in the thermal energy storage device determines a state of charge of the thermal energy storage device.

The heat transfer fluid may be a gas, particularly air, further in particular air at atmospheric pressure. Further, the first thermal energy storage device and the second thermal energy storage device may each comprise a solid thermal energy storage material. The thermal energy storage material may be provided as bulk material and have a relatively high thermal storage capacity. Preferably, thermal energy storage material comprises sand and/or stones. A heat exchange chamber of the first thermal energy storage device respectively the second thermal energy storage device may comprise multiple different thermal energy storage material. The stones can be natural stones or artificial stones. Mixtures thereof are possible, too. Artificial stones can consist of containers which are filled with heat storage material. Preferably, the stones comprise gravels (pebbles), rubbles and/or grit (splits). The artificial material comprises preferably clinkers, ceramics, steel or steel slack pellets. The stones may in particular be selected from the group of bricks, volcanic rocks, granites, basalts or ceramics provided as bulk material, for example. This can also be called pebble bed. However, the present invention is not limited to these examples.

Further, a state of charge of the respective thermal energy storage device impacts a pressure drop of the thermal energy storage device given a defined mass flow, controlling the first amount of thermal energy being larger than the second amount of thermal energy, would result in a natural redistribution of flow between the first thermal energy storage device and the second thermal energy storage device. This is the result of the first thermal energy storage and the second thermal energy storage device operating in parallel which requires that a pressure drop across all of the thermal energy storage devices are equal. According to the present invention, the flow control unit is configured for controlling the first flow and the second flow such that these effects of natural redistribution due to different states of charge are considered.

The first thermal energy storage device and the second thermal energy storage device are charged preferably during periods of a surplus of power generation. A fluid driving device is forcing the heat transfer fluid to pass through a heating device which for example can be powered electrically. Thus, the temperature of the heat transfer fluid is increased. The heat transfer fluid is then directed into the first thermal energy storage device and the second thermal energy storage device, where the thermal energy is transferred from the heat transfer fluid to the thermal energy storage material. After leaving the respective thermal energy storage device at a now lower temperature, the heat transfer fluid is redirected to the fluid driving device.

The thermal energy storage assembly may be used in a closed cycle system for storing thermal energy and in an open cycle system for storing thermal energy. In an open cycle system, the fluid driving device is configured for sucking ambient air into the system for storing thermal energy and for blowing a part of the heat transfer fluid off the system for storing thermal energy. Thereby, the open cycle system may exchange heat transfer fluid with the environment. In a closed cycle system, substantially no exchange between the heat transfer fluid and the environment occurs. Thereby, the closed cycle system may not exchange heat transfer fluid with the environment.

By the described thermal energy storage assembly, it is possible to charge e.g., one thermal energy storage device as much as required to stabilize the thermocline zone. By mixing in air of the other thermal energy storage devices that comprises a different amount of thermal energy, the temperature limit which is determined by the system to which the thermal energy assembly is connected, may be maintained. At the same time, poor thermocline zones may be completely reset in one or more thermal energy storage device(s). The charging temperature of the system is limited by the mixture temperature and not by the thermal energy storage device temperature.

In general, by using the described thermal energy storage assembly, a variety of mixing states may be created by asymmetrically charging the thermal energy storage devices. Hence, also different mixing temperatures may be adjusted as required.

When an energy demand is increasing, the thermal energy storage devices are discharged. During discharging, cold heat transfer fluid, in particular air, enters the thermal energy storage devices and the heat transfer fluid extracts thermal energy from the thermal energy storage material. The heated heat transfer fluid then proceeds to flow through the heat exchanger which is the transfer point to the intended process, such as the water-steam cycle of a power plant.

When realizing a system that uses multiple thermal energy storage devices which are discharged asymmetrically, it is possible to discharge e.g., from one thermal energy storage device as much of the thermocline zone as required. By mixing in heat transfer fluid (air) of the other thermal energy storage devices that comprise a different amount of thermal energy, in particular are in a different discharging state, the temperature which is determined by the system or the consumer may be (substantially) maintained. At the same time, poor thermocline zones may be reset to a desired extend, in particular completely reset, in the one or more thermal energy storage devices discharged to a greater extent, in particular fully discharged. The discharging temperature of the system is limited by the mixing temperature and not by the thermal energy storage device outlet temperature.

In general, a variety of mixing states can be created by asymmetrically discharging the first thermal energy storage device and the second thermal energy storage device. Hence, also different mixing temperatures may be adjusted as required.

According to a further embodiment of the invention the thermal energy storage assembly further comprises a first fluid pipe coupled to a first fluid opening of the first thermal energy storage device and to a second fluid opening of the second thermal energy storage device, wherein the heat transfer fluid is injectable from the first fluid pipe into the first thermal energy storage device and the second thermal energy storage device in the charging mode, and removable from the first thermal energy storage device and the second thermal energy storage device into the first fluid pipe in the discharging mode. The thermal energy storage assembly further comprises a second fluid pipe coupled to a further first fluid opening of the first thermal energy storage device and to a further second fluid opening of the second thermal energy storage device, wherein the heat transfer fluid is injectable in the second fluid pipe from the first thermal energy storage device and the second thermal energy storage device in the charging mode, and removable from the second fluid pipe into the first thermal energy storage device and the second thermal energy storage device in the discharging mode.

In other words, depending on the operational mode of the thermal energy storage assembly, particularly whether the thermal energy storage assembly is operated in the charging mode or in the discharging mode, the first fluid pipe respectively the second fluid pipe may be an inlet pipe or an outlet pipe.

In the charging mode, the heat transfer fluid may be guided through the first fluid pipe into the first thermal energy storage device and the second thermal energy storage device. Hence, the first fluid pipe may be the inlet pipe of the thermal energy storage assembly. At the same time, the heat transfer fluid may be guided through the second fluid pipe out of the first thermal energy storage device and the second thermal energy storage device. Hence, the second fluid pipe may be the outlet pipe of the thermal energy storage assembly.

In the discharging mode, the heat transfer fluid may be guided through the second fluid pipe into the first thermal energy storage device and the second thermal energy storage device. Hence, the second fluid pipe may be the inlet pipe of the thermal energy storage assembly. At the same time, the heat transfer fluid may be guided through the first fluid pipe out of the first thermal energy storage device and the second thermal energy storage device. Hence, the first fluid pipe may be the outlet pipe of the thermal energy storage assembly.

The first fluid pipe may be coupled to a first opening of the first thermal energy storage device and a second opening of the second thermal energy storage device by connecting the first fluid pipe and the first fluid opening by a first sub pipe as well as the first fluid pipe and the second fluid opening by a further first sub pipe.

The thermal energy storage assembly may further comprise a first fluid mixing device connected to the first fluid pipe. The first sub pipe and the further first sub pipe are merged into the first fluid pipe at a junction of the first sub pipe, the further first sub pipe and the first fluid pipe. The first fluid mixing device may be configured such that during the discharging mode, the first flow and the second flow flowing together through the first fluid pipe are mixed.

The second fluid pipe may be coupled to a further first opening of the first thermal energy storage device and a further second opening of the second thermal energy storage device by connecting the second fluid pipe and the further first fluid opening by a second sub pipe as well as the second fluid pipe and the further second fluid opening by a further second fluid pipe.

The thermal energy storage assembly may further comprise a second fluid mixing device connected to the second fluid pipe. The second sub pipe and the further second sub pipe are merged into the second fluid pipe at a junction of the second sub pipe, the further second sub pipe and the second fluid pipe. The second fluid mixing device may be configured such that during the charging mode, the first flow and the second flow flowing together through the second fluid pipe are mixed.

The first fluid mixing device respectively the second fluid mixing device may comprise a plurality of sheets respectively plates mounted to the first fluid pipe respectively the second fluid pipe and configured for mixing respectively swirling the first flow and the second flow for providing the heat transfer fluid with a homogenous temperature, velocity and/or flow. The respective fluid mixing device may be a static air mixer.

By providing the first fluid pipe and the second fluid pipe, a compact piping design for the charging mode and the discharging mode may be providable.

According to a further embodiment of the invention the thermal energy storage assembly further comprises a first temperature sensor at the first fluid opening of the first thermal energy storage device, and a second temperature sensor at the further first fluid opening of the first thermal energy storage device. The flow control unit is coupled to the first temperature sensor and to the second temperature sensor and is further configured for determining a temperature difference of a temperature of the heat transfer fluid at the first fluid opening and a temperature of the heat transfer fluid at the further first fluid opening, wherein the flow control unit is further configured to adjust the first amount of thermal energy introduced in the first thermal energy storage device in the charging mode or removed from the first thermal energy storage device in the discharging mode larger than the second amount of thermal energy introduced in the second thermal energy storage device in the charging mode or removed from the second thermal energy storage device in the discharging mode as long as the determined temperature difference is larger than a predefined temperature difference.

This may be in particular advantageous when the first thermal energy storage device with a high thermal energy storage capacity is desired.

By determining the temperature difference of the temperature of the heat transfer fluid at the first fluid opening and the temperature of the heat transfer fluid at the further first fluid opening, an extent to which the thermocline zone is pushed out of the first thermal energy storage device may be determined by the flow control unit.

By choosing the predefined temperature difference, the thermal energy storage capacity and a duration of the charging mode respectively the discharging mode may be easily adapted to specific applications.

For example, if it is desired to entirely remove the thermocline zone from the first thermal energy storage device, the predefined temperature difference may be set to near 0 K, in particular exactly 0 K. Hence, the first amount of thermal energy introduced in/removed from the first thermal energy storage device may be larger than the second amount of thermal energy introduced in/removed from the second thermal energy device until the thermocline zone is entirely removed from the first thermal energy storage device either in the charging or the discharging mode.

According to a further embodiment of the invention the determined temperature difference is indicative of an occurrence of a thermocline zone in the first thermal energy storage device, wherein the flow control unit is further configured to adjust the first amount of thermal energy introduced in the first thermal energy storage device in the charging mode or removed from the first thermal energy storage device in the discharging mode larger than the second amount of thermal energy introduced in the second thermal energy storage device in the charging mode or removed from the second thermal energy storage device in the discharging mode as long as the thermocline zone occurs in the first thermal energy storage device.

When the determined temperature difference between the temperature of the heat transfer fluid at the first fluid opening and the temperature of the heat transfer fluid at the further first fluid opening is near 0 K, the thermocline zone is substantially entirely removed from the first thermal energy storage device. Hence, the first thermal energy storage device is substantially entirely charged respectively substantially entirely discharged.

In other words, if the determined temperature difference is large, the thermocline zone is still completely or at least partially present in the first thermal energy storage device. On the other hand, if the determined temperature difference is small, the thermocline zone may be at least partially or completely removed from the first thermal energy storage device.

Thereby, the flow control unit stops asymmetrically charging/discharging the first thermal energy storage device and the second thermal energy storage device, when the thermocline zone is removed from the first thermal energy storage device to the desired degree.

The predefined temperature difference may be set to a percentage of a total temperature difference. The total temperature difference may be defined to be the difference between the highest temperature in a hot temperature zone of the first thermal energy storage device and the lowest temperature in a cold temperature zone of the first thermal energy storage device.

The hot zone of the first thermal energy storage device may denote a subsection which is in the charging mode arranged next to an inlet opening and which expands during the charging cycle. In the discharging mode, the hot zone is a subsection which is arranged next to the outlet opening and which becomes smaller. The cold zone of the second thermal energy storage device may denote a subsection different from the hot zone which is in the charging mode arranged next to an outlet opening and which becomes smaller during the charging cycle. In the discharging mode, the cold zone is arranged next to the inlet opening and expands.

Hence, the thermocline zone may be partially removed from the first thermal energy storage device and therefore the thermal energy storage capacity of the first thermal energy storage device may be increased by stabilizing the thermocline zone. Thereby, the thermal energy storage capacity of the entire thermal energy storage assembly may be increased and at the same time a desired outlet temperature of the thermal energy storage assembly may be maintained.

According to a further embodiment of the invention, the thermal energy storage assembly further comprises a first temperature sensor at the first fluid opening of the first thermal energy storage device, and a second temperature sensor at the further first fluid opening of the first thermal energy storage device. Further, the control unit is coupled to the first temperature sensor and to the second temperature sensor and is further configured to adjust the first amount of thermal energy introduced in the first thermal energy storage device in the charging mode or removed from the first thermal energy storage device in the discharging mode larger than the second amount of thermal energy introduced in the second thermal energy storage device in the charging mode or removed from the second thermal energy storage device in the discharging mode as long as a temperature detected by the second temperature sensor is lower than a charging interruption temperature or as long a temperature detected by the first temperature sensor is higher than a discharging interruption temperature.

The charging interruption temperature respectively the discharging interruption temperature may be limited by the predefined temperature which results from mixing the heat transfer fluid flowing out of the first thermal energy storage device and the heat transfer fluid flowing out of the second thermal energy storage device. The charging interruption temperature may be set to the lowest temperature plus a percentage of a total temperature difference. The discharging interruption temperature may be set to the highest temperature minus a percentage of a total temperature difference.

Hence, the thermocline zone may be partially removed from the first thermal energy storage device and therefore the thermal energy storage capacity of the first thermal energy storage device may be increased by stabilizing the thermocline zone. Thereby, the thermal energy storage capacity of the entire thermal energy storage assembly may be increased and at the same time a desired outlet temperature of the thermal energy storage assembly may be maintained.

According to a further embodiment of the invention, the thermal energy storage assembly further comprises a third temperature sensor arranged in the second fluid pipe for measuring a temperature of the heat transfer fluid in the second fluid pipe, wherein the flow control unit is further configured for controlling the first flow of the heat transfer fluid into the first thermal energy storage device and the second flow of the heat transfer fluid into the second thermal energy storage device in the charging mode on the basis of the temperature in the second fluid pipe.

The flow control unit may be coupled to the third temperature sensor and may receive temperature data from the third temperature sensor. Based on the received temperature data the flow control unit may control the first flow and the second flow during the charging mode. Particularly, during the charging mode, the temperature of the heat transfer fluid in the second fluid pipe may not exceed a predefined temperature being set dependent on which temperature the system being connected to the thermal energy storage assembly may maintain. Particularly, the predefined temperature may be based on the maximum temperature the blower may maintain, or the second fluid pipe may maintain.

Thereby, the system for storing thermal energy may reliably be operated and at the same time the thermal storage efficiency of the first thermal energy storage device and thereby of the thermal energy storage assembly may be increased.

According to a further embodiment of the invention the thermal energy storage assembly further comprises a fourth temperature sensor arranged in the first fluid pipe for measuring a temperature of the heat transfer fluid in the first fluid pipe, wherein the flow control unit is further configured for controlling the first flow of the heat transfer fluid from the first thermal energy storage device and the second flow of the heat transfer fluid from the second thermal energy device in the discharging mode on the basis of the temperature in the first fluid pipe.

The flow control unit may be coupled to the fourth temperature sensor and may receive temperature data from the fourth temperature sensor. Based on the received temperature data the flow control unit may control the first flow and the second flow during the discharging mode. Particularly, during the discharging mode, the temperature of the heat transfer fluid in the first fluid pipe may not differ from a predefined temperature being set dependent on which temperature the system being connected to the thermal energy storage assembly may maintain. Particularly, the predefined temperature may be based on the minimum operation temperature of the heat exchanger or a connected consumer.

Thereby, the system for storing thermal energy may reliably be operated and at the same time the thermal storage efficiency of the first thermal energy storage device and thereby of the thermal energy storage assembly may be increased.

According to a further embodiment of the invention the thermal energy storage assembly further comprises at least one flow control valve coupled to at least one of the first fluid opening, the further first fluid opening, the second fluid opening and the further second fluid opening for controlling the first flow of the heat transfer fluid and the second flow of the heat transfer fluid, wherein the at least one flow control valve is coupled and/or controllable by the flow control unit.

Various types of flow control valves may be used, such as butterfly valves, louver valves, multi-louver valves, split disc valves, guillotine valves and vane valves or any combination of those. One system may include multiple types of valves.

Each of the at least one flow control valves may be individually controllable by the flow control unit.

The flow control valve may be a valve which may control a fluid path by opening or closing, particularly entirely opening and entirely closing, a passageway. Hence, the flow control valve may be positioned in an open position or closed position. Thereby, a cost efficient and robust flow control valve may be used. Such a flow control valve may be denoted as a shut off damper.

Alternatively, the flow control valve may be a valve which may control a fluid path by partially obstructing a passageway. Hence, the flow control valve may be gradually positioned between an open position and a closed position. Thereby, a flow may be accurately and gradually be adjusted. Such a flow control valve may be denoted as a control damper.

At least one flow control valve may be coupled to the first fluid opening and/or at least one further flow control valve may be coupled to the further first fluid opening. In other words, all of the used flow control valves may be coupled to the first thermal energy storage device. Thereby, the first flow may be directly, and the second flow may be indirectly controlled. Hence, the first amount of thermal energy may be directly controlled. Therefore, the thermal energy storage assembly may be kept simple.

At least one flow control valve may be coupled to the second fluid opening and/or at least one further flow control valve may be coupled to the further second fluid opening. In other words, all of the flow control valves may be coupled to the second thermal energy storage device. Thereby, the first flow may be indirectly controlled. Hence, the first amount of thermal energy may be indirectly controlled. Therefore, the thermal energy storage assembly may be kept simple.

Further, at least one flow control valve may be coupled to the first fluid opening and/or the further first fluid opening as well as at least one further flow control valve may be coupled to the second fluid opening and/or the further second fluid opening. Thereby, a mixture of indirectly and directly controlling the first flow and therefore the first amount of thermal energy may be providable. This arrangement may be more complex and at the same time may provide a smoother and more accurate controlling of the first amount of thermal energy (first flow) and the second amount of thermal energy (second flow).

Particularly, the at least one flow control valve may allow an asymmetric flow through the first thermal energy storage device and the second thermal energy storage device by adjusting an effective pressure drop of the first thermal energy storage device and the second thermal energy storage device.

According to a further embodiment of the invention, the thermal energy storage assembly further comprises at least one blower coupled to at least one of the first fluid opening, the further first fluid opening, the second fluid opening and the further second fluid opening for controlling the first flow of the heat transfer fluid and the second flow of the heat transfer fluid, wherein the at least one blower is coupled and/or controllable by the flow control unit.

Each of the at least one blower may be individually controllable by the flow control unit. The at least one blower may allow to increase the respective flow through the opening to which the blower is coupled.

Particularly, the blower may allow a distribution of the heat transfer fluid to the first thermal energy storage device and the second thermal energy storage device such that the first amount of thermal energy introduced/removed by the first flow is larger than the second amount of thermal energy introduced/removed by the second flow, by individually providing heat transfer fluid to the first thermal energy storage device and the second thermal energy storage device.

At a respective fluid inlet opening of the first thermal energy storage device respectively the second thermal energy storage device (particularly, in the charging mode, the first fluid opening and the second fluid opening respectively in the discharging mode, the further first fluid opening and the further second fluid opening), the blower may be working in a blow mode. At a respective fluid outlet opening of the first thermal energy storage device respectively the second thermal energy storage device (particularly, in the charging mode, the further first fluid opening and the further second fluid opening respectively in the discharging mode, the first fluid opening and the second fluid opening), the blower may be working in a suction mode.

At least one blower may be coupled to the first fluid opening and/or at least one further blower may be coupled to the further first fluid opening. In other words, all of the used blowers may be coupled to the first thermal energy storage device. Thereby, the first flow may be directly, and the second flow may be indirectly controlled. Hence, the first amount of thermal energy may be directly controlled. Therefore, the thermal energy storage assembly may be kept simple.

At least one blower may be coupled to the second fluid opening and/or at least one further blower may be coupled to the further second fluid opening. In other words, all of the blowers may be coupled to the second thermal energy storage device. Thereby, the first flow may be indirectly controlled. Hence, the first amount of thermal energy may be indirectly controlled. Therefore, the thermal energy storage assembly may be kept simple.

Further, at least one blower may be coupled to the first fluid opening and/or the further first fluid opening as well as at least one blower may be coupled to the second fluid opening and/or the further second fluid opening. Thereby, a mixture of indirectly and directly controlling the first flow and therefore the first amount of thermal energy may be providable. This arrangement may be more complex and at the same time may provide a smoother and more accurate controlling of the first amount of thermal energy (first flow) and the second amount of thermal energy (second flow).

According to a further embodiment of the invention, the first thermal energy storage device and the second thermal energy storage device are horizontal thermal energy storage devices.

Horizontal thermal energy storage devices may advantageously be cost efficient and easy to scale with respect to their total storage capacity. Further, horizontal thermal energy storage devices may be used when a long storage time is desirable.

Alternatively, the first thermal energy storage device and the second thermal energy storage device may be vertical thermal energy storage devices. Vertical thermal energy storage devices may need little footprint and may provide an enhanced stability during idle. Further, vertical thermal energy storage devices may be used when a short storage time is desirable.

It may be emphasized that also a mixture of horizontal thermal energy storage device and vertical thermal energy storage device may be possible.

According to a further embodiment of the invention, the flow control unit is further configured for controlling the first flow of the heat transfer fluid based on at least one of the group consisting of a state of charge, a mass flow, a volume flow, a differential pressure, an outlet temperature or a thermocline status of at least one of the first thermal energy storage device and the second thermal energy storage device.

In other words, an operational concept for a distribution of the heat transfer fluid into the first flow and the second flow, and thereby the first amount of thermal energy and the second amount of thermal energy, may be based on plant targets for various criteria such as a thermal energy storage device state of charge, a mass flow per thermal energy storage device, a volume flow per thermal energy storage device, a differential pressure per thermal energy storage device, an outlet temperature per thermal energy storage device or a thermocline status per thermal energy storage device.

Thereby, the thermocline zone may be reliably reduced in, in particular removed from, the first thermal energy storage device and at the same time a predefined plant target may be ensured. The predefined plant target may be based on at least one of the group consisting of a predefined state of charge of one thermal energy storage device, a predefined mass flow respectively a predefined volume flow of one thermal energy storage device, a predefined differential pressure over one thermal energy storage device, a predefined outlet temperature of one thermal energy storage device, and thermocline status inside one thermal energy storage device.

In particular, the thermal energy storage assembly may comprise a plurality of temperature sensors provided on the first thermal energy storage device and/or on the second thermal energy storage device, wherein the plurality of temperature sensors is coupled to the flow control unit. The flow control unit may determine a temperature distribution based on data received from the plurality of temperature sensors and may determine the state of charge and/or the thermocline status of the respective thermal energy storage device based on the determined temperature distribution.

The thermal energy storage assembly may further comprise a pressure sensor provided at the first fluid opening respectively the second fluid opening and a further pressure sensor provided at the further first fluid opening respectively the further second fluid opening, wherein the pressure sensor and the further pressure sensor are coupled to the flow control unit. The flow control unit may determine a first differential pressure over the first thermal energy storage device respectively a second differential pressure over the second thermal energy storage device. In the charging mode and/or in the discharging mode, the flow control unit is further configured to control the first flow of the heat transfer fluid in such a way that the first differential pressure respectively the second differential pressure corresponds to a predefined differential pressure.

Further, the thermal energy storage assembly may comprise a mass flow sensor provided at the first fluid opening or the further first fluid opening respectively the second fluid opening or the further second fluid opening, wherein the mass flow sensor is coupled to the flow control unit. The flow control unit may determine a mass flow and/or a volume flow of the first thermal energy storage device respectively the second thermal energy storage device based on data received from the mass flow sensor. In the charging mode and/or in the discharging mode, the flow control unit is configured to control the first flow of the heat transfer fluid in such a way that the mass flow and/or the volume flow of the first thermal energy storage device respectively the second thermal energy storage device corresponds to a predefined mass flow and/or a predefined volume flow.

According to a further embodiment of the invention, the thermal energy storage assembly further comprises a third thermal energy storage device being fluidically coupled to the first thermal energy storage device and the second thermal energy storage device in parallel, wherein the flow control unit is further configured for controlling a third flow of a heat transfer fluid through the third thermal energy storage device, wherein in the charging mode, wherein thermal energy is further supposed to be transferred from the heat transfer fluid to the third thermal energy storage device, a third amount of thermal energy is introducible by the third flow of the heat transfer fluid in the third thermal energy storage device, the first flow of the heat transfer fluid is controllable by the flow control unit in such a way that the first amount of thermal energy introduced in the first thermal energy storage device is larger than the third amount of thermal energy introduced in the third thermal energy storage device, and wherein in the discharging mode, wherein the heat transfer fluid is further supposed to extract thermal energy from the third thermal energy storage device, the third amount of thermal energy is removable by the third flow of the heat transfer fluid from the third thermal energy storage device, the first flow of the heat transfer fluid is controllable by the flow control unit in such a way that the first amount of thermal energy removed from the first thermal energy storage device is larger than the third amount of thermal energy removed from the third thermal energy storage device.

By providing the third thermal energy storage device in parallel to the first thermal energy storage device and the second thermal energy storage device, and the flow control unit configured for controlling the third flow through the third thermal energy storage device in such a way that the first amount of thermal energy is larger than the third amount of thermal energy and larger than the second amount of thermal energy, may provide the possibility to remove the thermocline zone from the first thermal energy storage device during charging and discharging for an even greater extent while maintaining a predefined temperature at an outlet of the thermal energy storage assembly which may be lower than in the thermal energy storage assembly with solely the first thermal energy storage device and the second thermal energy storage device. Therefore, a storage capacity for thermal energy may be further increased.

Additionally, a fourth, fifth or sixth thermal energy storage device may be coupled in parallel to the first thermal energy storage device and the second thermal energy storage device. A total number of thermal energy storage devices being coupled in parallel may be limited by an outlet temperature of the thermal energy storage assembly, namely in the charging mode, a temperature of the heat transfer fluid in the second fluid pipe being determined by the third temperature sensor, and in the discharging mode, a temperature of the heat transfer fluid in the first fluid pipe being determined by the fourth temperature sensor. Therefore, the total number of thermal energy storage devices coupled in parallel is not limited to an absolute number.

According to a further embodiment of the invention, the second flow of the heat transfer fluid and the third flow of the heat transfer fluid are controllable by the flow control unit in such a way that in the charging mode the third amount of thermal energy introduced in the third thermal energy storage device is equal to the second amount of thermal energy introduced in the second thermal energy storage device, and in the discharging mode the third amount of thermal energy removed from the third thermal energy storage device is equal to the second amount of thermal energy removed from the second thermal energy storage device.

By providing the flow control unit configured for controlling the third flow through the third thermal energy storage device in such a way that the first amount of thermal energy is larger than the second amount of thermal energy and larger than the third amount of thermal energy and at the same time the second amount of thermal energy and the third amount of thermal energy are equal, may provide the possibility to increase the thermal storage capacity of an compact thermal energy storage assembly. Particularly, the thermocline zone may be reduced in, particularly removed from, the first thermal energy storage device during charging and discharging for an even greater extent while maintaining a predefined temperature at an outlet of the thermal energy storage assembly.

Alternatively, the third amount of thermal energy may be different from the second amount of thermal energy. Particularly, the third amount of thermal energy introduced in respectively removed from the third thermal energy storage may be smaller than the second amount of thermal energy introduced in respectively removed from the second thermal energy storage device. Therefore, a thermocline zone in the second thermal energy storage device may be reduced in, particularly removed from, the second thermal energy storage device, while a predefined outlet temperature of the thermal energy storage assembly may be kept. Particularly, the third amount of thermal energy introduced in respectively removed from the third thermal energy storage device may be larger than the second amount of thermal energy introduced in respectively removed from the second thermal energy storage device. Hence, a thermocline zone in the third thermal energy storage device may be reduced in, particularly removed from, the third thermal energy storage device, while a predefined outlet temperature may be kept.

According to a second aspect of the invention a system for storing thermal energy is provided. The system comprises a thermal energy storage assembly according to any one of the described embodiments, and at least one of a fluid driving device, in particular a blower, for driving the heat transfer fluid, a heating device configured for heating the heat transfer fluid in the charging mode, and a heat exchanger configured for transferring thermal energy of the heat transfer fluid to a thermal device in the discharging mode.

The heating device may be a heat source, particularly at least one of the group consisting of an electrical heater, a device providing exhaust gas, a heat pump, a process providing process steam, a solar thermal heater, a resistive heater, a plasma torch, an inductive heater, a burner operated with different fuels, e.g., hydrogen, bio-gas, natural gas, ethanol, ammonia, peat, hard coal, lignite, wood, wood pellets, gasoline, oil, a device providing waste combustion or geothermal energy.

In both the charging mode and the discharging mode, the fluid driving device is connected to the second fluid pipe of the thermal energy storage assembly. In the charging mode, the fluid driving device is connected between the second fluid pipe and the heating device. Further, the heating device is connected to the first fluid pipe of the thermal energy storage assembly. Thereby, the fluid driving device drives the heat transfer fluid from the heating device via the first fluid pipe through the thermal energy storage assembly. In the discharging mode, the fluid driving device is connected between the heat exchanger and the second fluid pipe. Thereby, the fluid driving device drives the heat transfer fluid from the thermal energy storage assembly where the heat transfer fluid removes thermal energy from the first thermal energy storage and the second thermal energy storage device, via the first fluid pipe to the heat exchanger. In the heat exchanger thermal energy extracted from the first thermal energy storage device and the second thermal energy storage device may be transferred to a thermal device, particularly a steam cycle. Further, the heat exchanger is connected to the first fluid pipe of the thermal energy storage assembly.

The system for storing thermal energy is based on the idea that by asymmetrically charging or discharging the first thermal energy storage device and the second thermal energy storage device such that the first amount of thermal energy introduced in or removed from the first thermal energy storage device is larger than the second amount of thermal energy introduced in or removed from the second thermal energy storage device, may provide the possibility to remove the thermocline zone from the first thermal energy storage device during charging and discharging while maintaining a predefined temperature at a heat exchanger inlet respectively a fluid driving device inlet. Therefore, a system for storing thermal energy having an increased storage capacity may be providable.

By providing the described system for storing thermal energy, a desired temperature profile establishes within the first thermal energy storage device. The resulting temperature profile has a desired ratio of regions with high temperature to a total volume of the first thermal energy storage device. The size of the region with the high temperature constates a usable thermal energy storage volume for a subsequent discharging of the thermal energy storage assembly.

According to a third aspect of the invention there is described a method for storing thermal energy within the thermal energy storage assembly according to any one of the described embodiments. The method comprises in a charging mode, wherein thermal energy is supposed to be transferred from the heat transfer fluid to the first thermal energy storage device and the second thermal energy storage device, (a) introducing a first amount of thermal energy by the first flow of the heat transfer fluid in the first thermal energy storage device, (b) introducing a second amount of thermal energy by the second flow of the heat transfer fluid in the second thermal energy storage device, and (c) controlling the first flow of the heat transfer fluid by the flow control unit in such a way that the first amount of thermal energy introduced in the first thermal energy storage device is larger than the second amount of thermal energy introduced in the second thermal energy storage device.

According to an exemplary embodiment of the invention, the method further comprises in a discharging mode, wherein thermal energy is supposed to be removed from the first thermal energy storage device and the second thermal energy storage device by the heat transfer fluid, (a)removing a first amount of thermal energy by the first flow of the heat transfer fluid from the first thermal energy storage device, (b) removing a second amount of thermal energy by the second flow of the heat transfer fluid from the second thermal energy storage device, and (c) controlling the first flow of the heat transfer fluid by the flow control unit in such a way that the first amount of thermal energy removed from the first thermal energy storage device is larger than the second amount of thermal energy removed from the second thermal energy storage device.

By operating the thermal energy storage assembly according to the described method, a desired temperature profile establishes within the first thermal energy storage device. The resulting temperature profile has a desired ratio of regions with high temperature to a total volume of the first thermal energy storage device. The size of the region with the high temperature constates a usable thermal energy storage volume for a subsequent discharging of the thermal energy storage assembly. In other words, by operating the thermal energy storage assembly according to the described method, the thermocline zone may be extracted from the first thermal energy storage device to a desired extent.

Furthermore, the above-described method may be implemented for various plant operational strategies, such as scheduled rotation of the fully charged/discharged thermal energy storage device(s) as a "normal" operating concept. Also a manual implementation may be possible for (a) resetting a thermal energy storage device with a poor thermocline zone, (b) maximize a thermal energy storage duration ability prior to an expected extended period of idle, or (c) maximally charging/discharging the first thermal energy storage device to ensure an availability while the second thermal energy storage device is operated as normal. Additionally, a manual implementation may be possible while keeping individual thermal energy storage devices at a certain state of charge for availability when all other thermal energy storage devices are completely discharged (i.e., not available for further discharging). Those thermal energy storage devices would be discharged "slower" than the other and thus still have a certain energy level at the end of charging/discharging and would contribute to mixing the overall outlet temperature of the thermal energy storage assembly in the second fluid pipe.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic illustration of a system for storing thermal energy during a charging mode according to an exemplary embodiment of the invention.
Figure 2 shows a schematic illustration of the system of Figure 1 at the end of the charging mode according to the exemplary embodiment of the invention.
Figure 3 shows a schematic illustration of a system for storing thermal energy during a discharging mode according to a further exemplary embodiment of the invention.
Figure 4 shows a schematic illustration of the system of Figure 3 at the end of the discharging mode according to the further exemplary embodiment of the invention.
Figure 5 shows a schematic illustration of a system for storing thermal energy during a charging mode according to a further exemplary embodiment of the invention.
Figure 6 shows a schematic illustration of the system of Figure 5 at the end of the charging mode according to the further exemplary embodiment of the invention.
Figure 7 shows a schematic illustration of a system for storing thermal energy during a discharging mode according to a further exemplary embodiment of the invention.
Figure 8 shows a schematic illustration of the system of Figure 7 at the end of the discharging mode according to the further exemplary embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

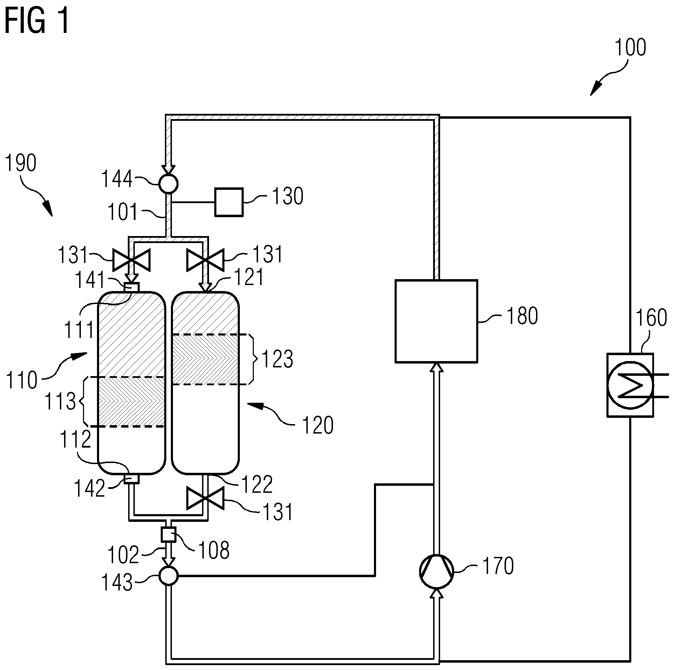

**Figure 1** shows a schematic illustration of a system 100 for storing thermal energy during a charging mode according to an exemplary embodiment of the invention. The system 100 comprises a thermal energy storage assembly 190 comprising a first thermal energy storage device 110, a second thermal energy storage device 120 fluidically coupled in parallel to the first thermal energy storage device 110, and a flow control unit 130. The system 100 further comprises a fluid driving device 170 connected to a second fluid pipe 102 and a heating device 180 connected between the fluid driving device 170 and a first fluid pipe 101. In the charging mode shown in Figure 1, the first fluid pipe 101 corresponds to an inlet pipe of the thermal energy storage assembly 190 and the second fluid pipe 102 correspond to an outlet pipe of the thermal energy storage assembly 190. During the charging mode, heat transfer fluid is guided from the fluid driving device 170 to the heating device 180 and subsequently through the thermal energy storage assembly 190. The heat transfer fluid is guided through the first pipe 101 and subsequently a first flow of the heat transfer fluid is guided via a first fluid opening 111 into the first thermal energy storage device 110, and a second flow of the heat transfer fluid is guided via a second opening 121 into the second thermal energy storage device 120. By flowing through the first thermal energy storage device 110 the first flow introduces a first amount of thermal energy in the first thermal energy storage device 110. After flowing through the first thermal energy storage device 110, the first flow is guided via a further first fluid opening 112 out of the first thermal energy storage device 110 and through the second fluid pipe 102. By flowing through the second thermal energy storage device 120 the second flow introduces a second amount of thermal energy in the second thermal energy storage device 120. After flowing through the second thermal energy storage device 120, the second flow is guided via a further second fluid opening 122 out of the second thermal energy storage device 120 and through the second fluid pipe 102.

A respective flow control valve 131 is coupled to the first fluid opening 111, to the second fluid opening 121 and to the further second fluid opening. The three flow control valves 131 are controlled by the flow control unit 130 in such a way that the first flow is controlled by the flow control valve 131 coupled to the first fluid opening 111 and that the second flow is controlled by the flow control valve 131 coupled to the second fluid opening 121 together with the flow control valve 131 coupled to the further second fluid opening 122. The flow control valve 133 coupled to the further second fluid opening 122 indirectly controls the second flow by introducing resistance at the further second fluid opening 122.

The first flow introduces the first amount of thermal energy in the first thermal energy storage device 110 and the second flow introduces the second amount of thermal energy in the second thermal energy storage device 120, wherein the first amount is larger than the second amount. Hence, a first thermocline zone 113 is pushed nearer to the further first fluid opening 112 than a second thermocline zone 123 is pushed to the further second fluid opening 122. In other words, the first thermal energy storage device 110 is asymmetrically charged (charged more than) the second thermal energy storage device 120. The thermocline zone 113, 123 is arranged in-between a hot zone arranged next to the first fluid opening 111 respectively the second fluid opening 121, and a cold zone arranged next to the further first fluid opening 112 respectively the further second fluid opening 122. A temperature of the hot zone corresponds to the temperature of the heat transfer fluid in the first fluid pipe 101 respectively the temperature of the heat transfer fluid at an outlet of the heating device 180. A temperature of the cold zone corresponds the temperature of the heat transfer fluid in the second fluid pipe 102 respectively the temperature of the heat transfer fluid at an inlet of the heating device 180 and at the fluid driving device 170. In the thermocline zone 113, 123 a temperature gradient establishes between the temperature of the heat transfer fluid in the hot zone and the temperature of the heat transfer fluid in the cold zone.

A first temperature sensor 141 is mounted to the first fluid opening 111 and a second temperature sensor 142 is mounted to the further first fluid opening 112. The flow control unit 130 determines a temperature difference which is larger than a predefined temperature difference. Hence, the first thermocline zone 113 still occurs entirely inside the first thermal energy storage device 110.

Furthermore, a third temperature sensor 143 is arranged in the second fluid pipe 102 to measure the temperature of the heat transfer fluid leaving the thermal energy storage assembly 190. A fourth temperature sensor 144 is arranged in the first fluid pipe 101 to measure the temperature of the heat transfer fluid guided into the thermal energy storage assembly 190 and before being split up in the first flow and the second flow. The temperature measured by the third temperature sensor 143 is indicative for the mixing temperature of the first flow and the second flow, wherein the flow control unit 130 controls the first flow and the second flow based on the mixing temperature measured by the third temperature sensor 143.

Alternatively, the first temperature sensor 141 may be omitted or not read out. Hence, a temperature at the further first fluid opening 112 may be measured by the second temperature sensor 142, which temperature is lower than a charging interruption temperature. Hence, the first thermocline zone 113 still occurs inside the first thermal energy storage device 110.

Further, the thermal energy storage assembly 190 comprises a second fluid mixing device 108 which is connected to the second fluid pipe 102. The first flow and the second flow are mixed respectively swirled at the second fluid mixing device 108 which is configured such that the heat transfer fluid in the second fluid pipe 102 comprises substantially homogenous properties, e.g., a homogenous temperature measured at the third temperature sensor 143.

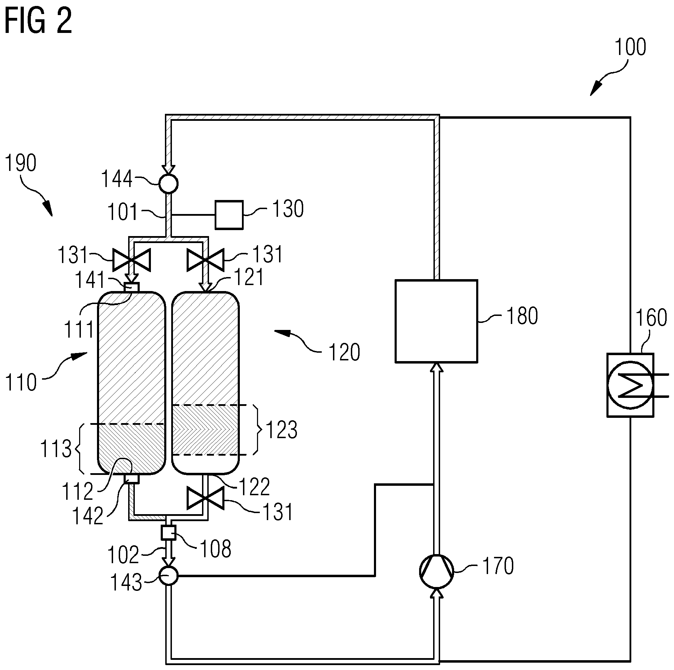

**Figure 2** shows a schematic illustration of the system 100 of Figure 1 at the end of the charging mode according to the exemplary embodiment of the invention.

The determined temperature difference between the temperature measured by the first temperature sensor 141 and the temperature measured by the second temperature sensor 142 is equal to the predefined temperature difference. Hence, the three flow control valves 131 are closed and the charging mode is ended. The first thermocline zone 113 is partly pushed out of the further first fluid opening 112 and the second thermocline zone 123 still occurs inside the second thermal energy storage device 120. A temperature measured at the third temperature sensor 143 is substantially equal to a predefined temperature determined by the lowest inlet temperature of the fluid driving device 170. In particular, the first flow comprises a temperature of the thermocline zone 113 which temperature is higher than the predefined temperature, and the second flow comprises a temperature of the cold zone which temperature is substantially equal to the predefined temperature.

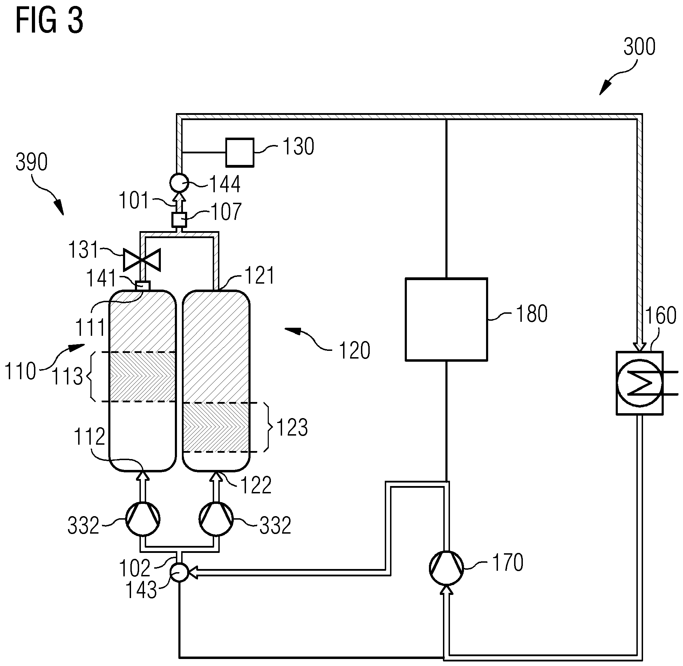

**Figure 3** shows a schematic illustration of a system 300 for storing thermal energy during a discharging mode according to a further exemplary embodiment of the invention.

The system 300 comprises a thermal energy storage assembly 390 comprising the first thermal energy storage device 110, the second thermal energy storage device 120 fluidically coupled in parallel to the first thermal energy storage device 110, and the flow control unit 130. The system 300 further comprises the fluid driving device 170 coupled to the second fluid pipe 102 such that the cold heat transfer fluid is guided from the fluid driving device 170 via the first thermal energy storage device 110 and the second thermal energy storage device 120 to the first fluid pipe 101. Thereby, the first flow removes a first amount of thermal energy from the first thermal energy storage device 110 to the heat transfer fluid, and the second flow removes a second amount of thermal energy from the second thermal energy storage device 120, wherein the first amount is larger than the second amount. The first fluid pipe 101 is connected to the heat exchanger 160. Hence, the cold heat transfer fluid is guided from the fluid driving device 170 through the thermal energy storage assembly 390. Further, the hot heat transfer fluid is subsequently guided to the heat exchanger 160 where the hot heat transfer fluid transfers the thermal energy removed from the thermal energy storage assembly 390 to a further thermal cycle (not shown).

In difference to the thermal energy storage assembly 190, the thermal energy storage assembly 390 comprises a respective blower 332 coupled to the further first fluid opening 112and to the further second fluid opening 122 as well as a flow control valve 131 coupled to the first fluid opening 111. The first flow of the heat transfer fluid is controlled by the blower 332 coupled to the further first fluid opening 112 and the flow control valve 131 coupled to the first fluid opening 111 in such a way that the first amount of thermal energy is larger than the second amount of thermal energy. As a result, the first thermocline zone 113 is positioned nearer to the first fluid opening 111 than the second thermocline zone 123 is positioned to the second fluid opening 121.

Additionally, the second temperature sensor 142 (shown in Figures 1 and 2) is omitted and solely the first temperature sensor 141 is coupled to the first fluid opening 111. The temperature measured by the first temperature sensor 141 is higher than a discharging interruption temperature. Hence, the first thermocline zone 113 still occurs inside the first thermal energy storage device 110.

Furthermore, the third temperature sensor 143 measures the temperature of the heat transfer fluid introduced in the thermal energy storage assembly 390. The fourth temperature sensor 144 measures a temperature of the heat transfer fluid leaving the thermal energy storage assembly 390 which is indicative for the mixing temperature of the first flow and the second flow. The temperature measured at the fourth temperature sensor 144 is substantially equal to a predefined temperature determined by a required respectively lowest inlet temperature of the heat exchanger 160.

Further, the thermal energy storage assembly 190 comprises a first fluid mixing device 107 which is connected to the first fluid pipe 101. The first flow and the second flow are mixed respectively swirled at the first fluid mixing device 107 which is configured such that the heat transfer fluid in the first fluid pipe 101 comprises substantially homogenous properties, e.g., a homogenous temperature measured at the fourth temperature sensor 144.

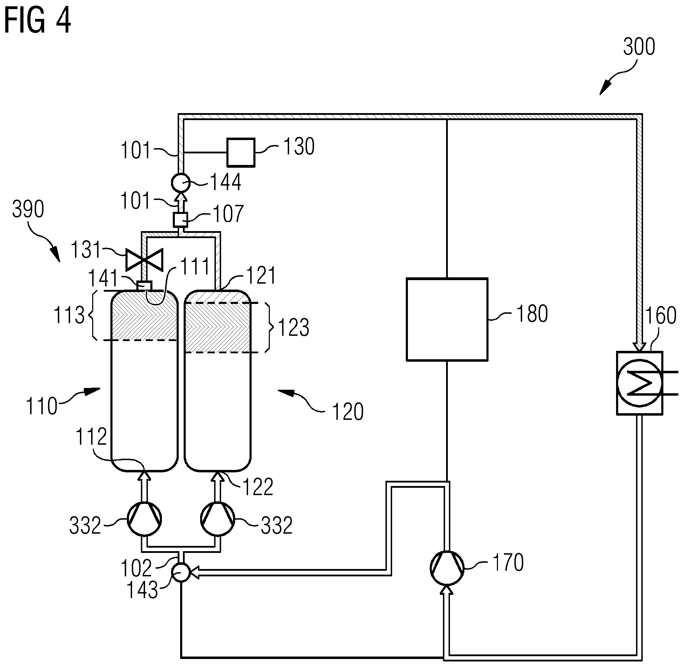

**Figure 4** shows a schematic illustration of the system 300 of Figure 3 at the end of the discharging cycle according to the further exemplary embodiment of the invention.

The temperature measured by the first temperature sensor 141 is equal to the discharging interruption temperature. Hence, the two blowers 332 are turned off and the flow control valve 131 is closed. Hence, the discharging mode is ended. The first thermocline zone 113 is partly pushed out of the first fluid opening 111 and the second thermocline zone 123 still occurs inside the second thermal energy storage device 120. A temperature measured at the fourth temperature sensor 144 is equal to a predefined temperature determined by the lowest or the optimal inlet temperature of the heat exchanger 160. In particular, the first flow comprises a temperature of the thermocline zone 113 which temperature is lower than the predefined temperature, and the second flow comprises a temperature of the hot zone which temperature is substantially equal to the predefined temperature.

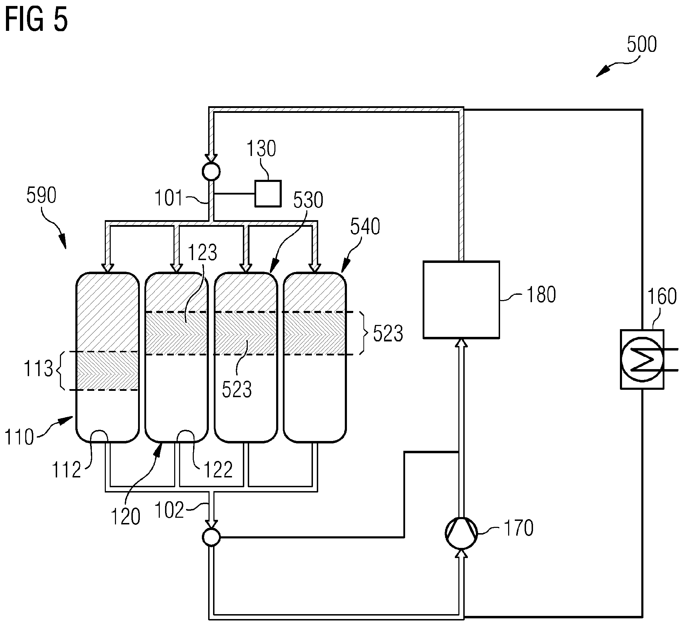

**Figure 5** shows a schematic illustration of a system 500 for storing thermal energy during a charging mode according to a further exemplary embodiment of the invention.

The system 500 comprises a thermal energy storage assembly 590 comprising the first thermal energy storage device 110, the second thermal energy storage device 120, a third thermal energy storage device 530 and a fourth thermal energy storage device 540 fluidically coupled in parallel to each other. The flow control unit 130 controls a first flow of the heat transfer fluid through the first thermal energy storage device 110, a second flow of the heat transfer fluid through the second thermal energy storage device 120, a third flow of the heat transfer fluid through the third thermal energy storage device 530, and a fourth flow of the heat transfer fluid through the fourth thermal energy storage device 540 such that a first amount of thermal energy introduced in the first thermal energy storage device 110 is larger than a second amount of thermal energy introduced in the second thermal energy storage device 120, a third amount of thermal energy introduced in the third thermal energy storage device 530, and a fourth amount of thermal energy introduced in the fourth thermal energy storage device 540, wherein the second amount, the third amount and the fourth amount are equal.

Therefore, the first thermocline zone 113 occurs in the first thermal energy storage device 110 positioned nearer to the further first fluid opening 112 than the second thermocline zone 123 relatively to the further second fluid opening 122. Additionally, a thermocline zone 523 occurs in each of the third thermal energy storage device 530 and the fourth thermal energy storage device 540. The second thermocline zone 123 and the two thermocline zones 523 are each positioned at the same length position inside the respective thermal energy storage device 120, 530, 540. Therefore, the first thermal energy storage device 110 is charged to a greater extent than the second thermal energy storage device 120, the third thermal energy storage device 530 and the fourth thermal energy storage device 540.

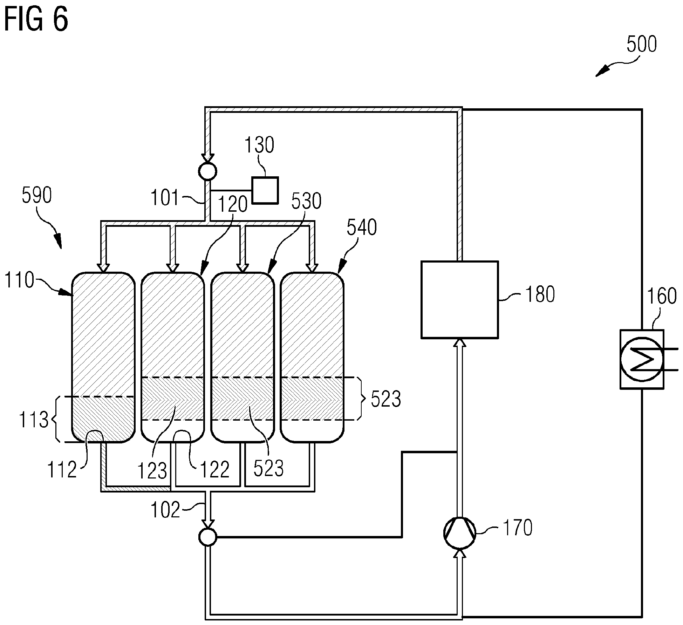

**Figure 6** shows a schematic illustration of the system 500 of Figure 5 at the end of the charging mode according to the further exemplary embodiment of the invention.

At the end of the charging mode, the first thermocline zone 113 is partly pushed out of the further first fluid opening 112. At the same time, the second thermocline zone 123 is still positioned inside the second thermal energy storage device 120, and each of the two thermocline zones 523 are still positioned within the third thermal energy storage device 530 respectively the fourth thermal energy storage device 540.

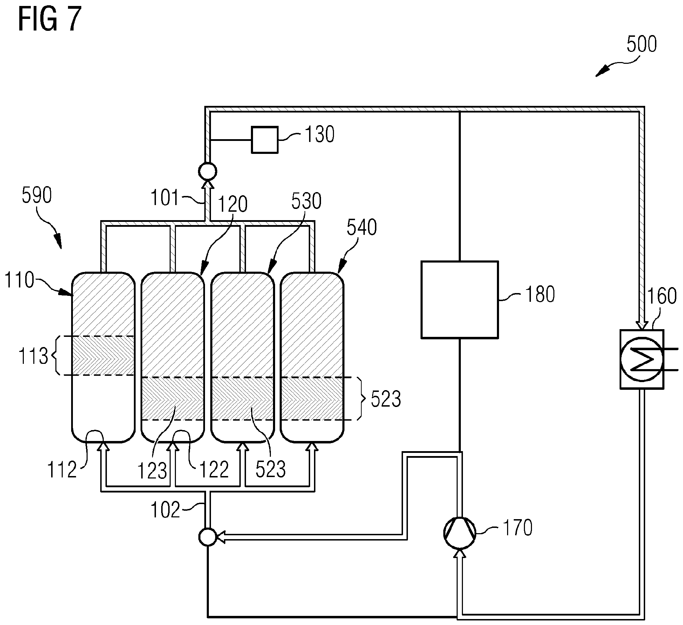

**Figure 7** shows a schematic illustration of a system 500 of Figure 5 for storing thermal energy during a discharging mode according to a further exemplary embodiment of the invention.

The system 500 comprises a thermal energy storage assembly 590 comprising the first thermal energy storage device 110, the second thermal energy storage device 120, the third thermal energy storage device 530 and the fourth thermal energy storage device 540 fluidically coupled in parallel to each other. The flow control unit 130 controls a first flow of the heat transfer fluid through the first thermal energy storage device 110, a second flow of the heat transfer fluid through the second thermal energy storage device 120, a third flow of the heat transfer fluid through the third thermal energy storage device 530, and a fourth flow of the heat transfer fluid through the fourth thermal energy storage device 540 such that a first amount of thermal energy removed from the first thermal energy storage device 110 is larger than a second amount of thermal energy removed from the second thermal energy storage device 120, a third amount of thermal energy removed from the third thermal energy storage device 530, and a fourth amount of thermal energy removed from the fourth thermal energy storage device 540, wherein the second amount, the third amount and the fourth amount are equal.

Therefore, the first thermocline zone 113 occurs in the first thermal energy storage device 110 positioned nearer to the first fluid opening 111 than the second thermocline zone 123 relatively to the second fluid opening 112. Additionally, a thermocline zone 523 occurs in each of the third thermal energy storage device 530 and the fourth thermal energy storage device 540. The second thermocline zone 123 and the two thermocline zones 523 are each positioned at the same length position inside the respective thermal energy storage device 120, 530, 540. Therefore, the first thermal energy storage device 110 is discharged to a greater extent than the second thermal energy storage device 120, the third thermal energy storage device 530 and the fourth thermal energy storage device 540.

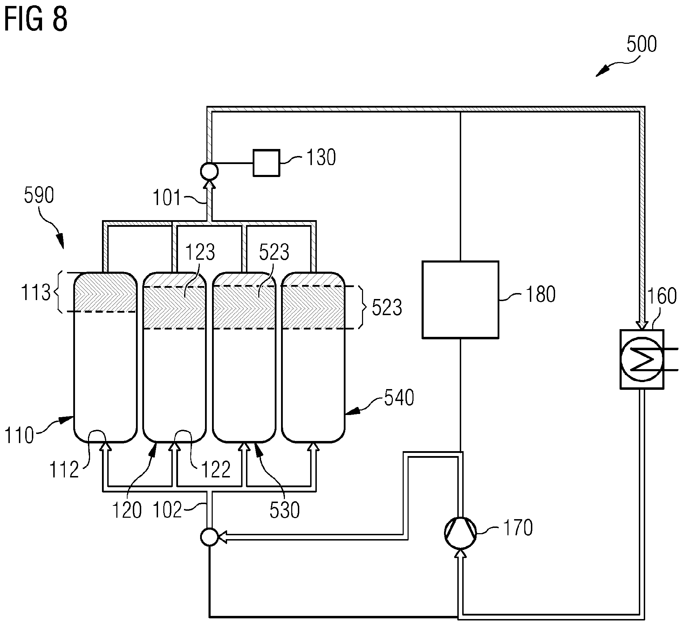

**Figure 8** shows a schematic illustration of the system 500 of Figure 5 at the end of the discharging mode according to the further exemplary embodiment of the invention.

At the end of the discharging cycle, the first thermocline zone 113 is partly pushed out of the first fluid opening 111. At the same time, the second thermocline zone 123 is still positioned inside the second thermal energy storage device 120 and each of the two thermocline zones 523 is still positioned within the third thermal energy storage device 530 respectively the fourth thermal energy storage device 540.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. A thermal energy storage assembly (190, 390, 590) comprising
a first thermal energy storage device (110),
a second thermal energy storage device (120) being fluidically coupled to the first thermal energy storage device (110) in parallel, and
a flow control unit (130) configured for controlling a first flow of a heat transfer fluid through the first thermal energy storage device (110) and a second flow of the heat transfer fluid through the second thermal energy storage device (120),
wherein in a charging mode, wherein thermal energy is supposed to be transferred from the heat transfer fluid to the first thermal energy storage device (110) and the second thermal energy storage device (120), a first amount of thermal energy is introducible by the first flow of the heat transfer fluid in the first thermal energy storage device (110) and a second amount of thermal energy is introducible by the second flow of the heat transfer fluid in the second thermal energy storage device (120),
the first flow of the heat transfer fluid is controllable by the flow control unit (130) in such a way that the first amount of thermal energy introduced in the first thermal energy storage device (110) is larger than the second amount of thermal energy introduced in the second thermal energy storage device (120), and
wherein in a discharging mode, wherein the heat transfer fluid is supposed to extract thermal energy from the first thermal energy storage device (110) and the second thermal energy storage device (120), a first amount of thermal energy is removable by the first flow of the heat transfer fluid from the first thermal energy storage device (110) and a second amount of thermal energy is removable by the second flow of the heat transfer fluid from the second thermal energy storage device (110),
the first flow of the heat transfer fluid is controllable by the flow control unit (130) in such a way that the first amount of thermal energy removed from the first thermal energy storage device (110) is larger than the second amount of thermal energy removed by the second thermal energy storage device (120).

2. The thermal energy storage assembly (190, 390, 590) according to claim 1, further comprising
a first fluid pipe (101) coupled to a first fluid opening (111) of the first thermal energy storage device (110) and to a second fluid opening (121) of the second thermal energy storage device (120),
wherein the heat transfer fluid is injectable from the first fluid pipe (101) into the first thermal energy storage device (110) and the second thermal energy storage device (120) in the charging mode, and removable from the first thermal energy storage device (110) and the second thermal energy storage device (120) into the first fluid pipe (101) in the discharging mode, and
a second fluid pipe (102) coupled to a further first fluid opening (112) of the first thermal energy storage device (110) and to a further second fluid opening (122) of the second thermal energy storage device (120),
wherein the heat transfer fluid is injectable in the second fluid pipe (102) from the first thermal energy storage device (110) and the second thermal energy storage device (120) in the charging mode, and removable from the second fluid pipe (102) into the first thermal energy storage device (110) and the second thermal energy storage device (120) in the discharging mode.

3. The thermal energy storage assembly (190, 390, 590) according to claim 2, further comprising
a first temperature sensor (141) at the first fluid opening (111) of the first thermal energy storage device (110), and
a second temperature sensor (142) at the further first fluid opening (112) of the first thermal energy storage device (110),
wherein the flow control unit (130) is coupled to the first temperature sensor (141) and to the second temperature sensor (142) and is further configured for determining a temperature difference of a temperature of the heat transfer fluid at the first fluid opening (111) and a temperature of the heat transfer fluid at the further first fluid opening (112),
wherein the flow control unit (130) is further configured to adjust the first amount of thermal energy introduced in the first thermal energy storage device (110) in the charging mode or removed from the first thermal energy storage device (110) in the discharging mode larger than the second amount of thermal energy introduced in the second thermal energy storage device (120) in the charging mode or removed from the second thermal energy storage device (120) in the discharging mode as long as the determined temperature difference is larger than a predefined temperature difference.

4. The thermal energy storage assembly (190, 390, 590) according to claim 3,
wherein the determined temperature difference is indicative of an occurrence of a thermocline zone (113) in the first thermal energy storage device (110),
wherein the flow control unit (130) is further configured to adjust the first amount of thermal energy introduced in the first thermal energy storage device (110) in the charging mode or removed from the first thermal energy storage device (110) in the discharging mode larger than the second amount of thermal energy introduced in the second thermal energy storage device (120) in the charging mode or removed from the second thermal energy storage device (120) in the discharging mode as long as the thermocline zone (113) occurs in the first thermal energy storage device (110).

5. The thermal energy storage assembly (190, 390, 590) according to claim 2, further comprising
a first temperature sensor (141) at the first fluid opening (111) of the first thermal energy storage device (110), and
a second temperature sensor (142) at the further first fluid opening (112) of the first thermal energy storage device (110),
wherein the control unit (130) is coupled to the first temperature sensor (141) and to the second temperature sensor (142) and is further configured to adjust the first amount of thermal energy introduced in the first thermal energy storage device (110) in the charging mode or removed from the first thermal energy storage device (110) in the discharging mode larger than the second amount of thermal energy introduced in the second thermal energy storage device (120) in the charging mode or removed from the second thermal energy storage device (120) in the discharging mode as long as a temperature detected by the second temperature sensor (142) is lower than a charging interruption temperature or as long a temperature detected by the first temperature sensor (141) is higher than a discharging interruption temperature.

6. The thermal energy storage assembly (190, 390, 590) according to any one of the claims 2 to 5, further comprising
a third temperature sensor (143) arranged in the second fluid pipe (102) for measuring a temperature of the heat transfer fluid in the second fluid pipe (102),
wherein the flow control unit (130) is further configured for controlling the first flow of the heat transfer fluid into the first thermal energy storage device (110) and the second flow of the heat transfer fluid into the second thermal energy storage device (120) in the charging mode on the basis of the temperature in the second fluid pipe (102).

7. The thermal energy storage assembly (190, 390, 590) according to any one of the claims 2 to 6, further comprising
a fourth temperature sensor (144) arranged in the first fluid pipe (101) for measuring a temperature of the heat transfer fluid in the first fluid pipe (101),
wherein the flow control unit (130) is further configured for controlling the first flow of the heat transfer fluid from the first thermal energy storage device (110) and the second flow of the heat transfer fluid from the second thermal energy device (120) in the discharging mode on the basis of the temperature in the first fluid pipe (101).

8. The thermal energy storage assembly (190, 390, 590) according to any one of the claims 2 to 7, further comprising
at least one flow control valve (131) coupled to at least one of the first fluid opening (111), the further first fluid opening (112), the second fluid opening (121) and the further second fluid opening (122) for controlling the first flow of the heat transfer fluid and the second flow of the heat transfer fluid,
wherein the at least one flow control valve (131) is coupled and/or controllable by the flow control unit (130).

9. The thermal energy storage assembly (190, 390, 590) according to any one of the claims 2 to 8, further comprising
at least one blower (332) coupled to at least one of the first fluid opening (111), the further first fluid opening (112), the second fluid opening (121) and the further second fluid opening (122) for controlling the first flow of the heat transfer fluid and the second flow of the heat transfer fluid,
wherein the at least one blower (332) is coupled and/or controllable by the flow control unit (130).

10. The thermal energy storage assembly (190, 390, 590) according to any one of the claims 1 to 9,
wherein the first thermal energy storage device (110) and the second thermal energy storage device (120) are horizontal thermal energy storage devices.

11. The thermal energy storage assembly (190, 390, 590) according to any one of the claims 1 to 10,
wherein the flow control unit (130) is further configured for controlling the first flow of the heat transfer fluid based on at least one of the group consisting of a state of charge, a mass flow, a volume flow, a differential pressure, an outlet temperature or a thermocline status of at least one of the first thermal energy storage device (110) and the second thermal energy storage device (120).

12. The thermal energy storage assembly (190, 390, 590) according to any one of the claims 1 to 11, further comprising
a third thermal energy storage device (530) being fluidically coupled to the first thermal energy storage device (110) and the second thermal energy storage device (120) in parallel,
wherein the flow control unit (130) is further configured for controlling a third flow of a heat transfer fluid through the third thermal energy storage device (530),
wherein in the charging mode, wherein thermal energy is further supposed to be transferred from the heat transfer fluid to the third thermal energy storage device (530), a third amount of thermal energy is introducible by the third flow of the heat transfer fluid in the third thermal energy storage device (530),
the first flow of the heat transfer fluid is controllable by the flow control unit (130) in such a way that the first amount of thermal energy introduced in the first thermal energy storage device (110) is larger than a third amount of thermal energy introduced in the third thermal energy storage device (530), and
wherein in the discharging mode, wherein the heat transfer fluid is further supposed to extract thermal energy from the third thermal energy storage device (530), the third amount of thermal energy is removable by the third flow of the heat transfer fluid from the third thermal energy storage device (530),
the first flow of the heat transfer fluid is controllable by the flow control unit (130) in such a way that the first amount of thermal energy removed from the first thermal energy storage device (110) is larger than the third amount of thermal energy removed from the third thermal energy storage device (530).

13. The thermal energy storage assembly (190, 390, 590) according to claim 12,
wherein the second flow of the heat transfer fluid and the third flow of the heat transfer fluid are controllable by the flow control unit (130) in such a way that
in the charging mode the third amount of thermal energy introduced in the third thermal energy storage device (530) is equal to the second amount of thermal energy introduced in the second thermal energy storage device (120), and
in the discharging mode the third amount of thermal energy removed from the third thermal energy storage device (530) is equal to the second amount of thermal energy removed from the second thermal energy storage device (120).

14. A system (100, 300, 500) for storing thermal energy comprising
the thermal energy storage assembly (190, 390, 590) according to any one of the claims 1 to 13, and at least one of a fluid driving device (170), in particular a blower, for driving the heat transfer fluid,
a heating device (180) configured for heating the heat transfer fluid in the charging mode, and
a heat exchanger (160) configured for transferring thermal energy of the heat transfer fluid to a thermal device in the discharging mode.

15. A method for storing thermal energy in the thermal energy storage assembly (190, 390, 590) according to any one of the claims 1 to 14, wherein the method comprises
in a charging mode, wherein thermal energy is supposed to be transferred from the heat transfer fluid to the first thermal energy storage device (110) and the second thermal energy storage device (120),
introducing a first amount of thermal energy by the first flow of the heat transfer fluid in the first thermal energy storage device (110), and
introducing a second amount of thermal energy by the second flow of the heat transfer fluid in the second thermal energy storage device (120),
controlling the first flow of the heat transfer fluid by the flow control unit (130) in such a way that the first amount of thermal energy introduced in the first thermal energy storage device (110) is larger than the second amount of thermal energy introduced in the second thermal energy storage device (120).
